Europäisches Patentamt

European Patent Office

Office européen des brevets

(19)

(11) Publication number: **0 109 262**
**A1**

(12) **EUROPEAN PATENT APPLICATION**

(21) Application number: **83306843.0**

(22) Date of filing: **09.11.83**

(51) Int. Cl.³: **A 47 J 41/02**

(30) Priority: **10.11.82 US 440586**

(43) Date of publication of application: **23.05.84**
**Bulletin 84/21**

(84) Designated Contracting States: **AT BE CH DE FR GB IT
LI LU NL SE**

(71) Applicant: **ALADDIN INDUSTRIES, INCORPORATED,
703 Murfreesboro Road P.O. Box 100255, Nashville
Tennessee 37210 (US)**

(72) Inventor: **Gately, Connie Marvin, 200 Green Harbor
Drive, Old Hickory Tennessee 37138 (US)**
Inventor: **Lafevor, Jack Wendell, 1712 Indian Hills,
Lebanon Tennessee 37087 (US)**
Inventor: **Morehouse, Michael Eugene, 300 Country
Court, Antioch Tennessee 37013 (US)**
Inventor: **Stewart, Herbery Milo, 2728 Mossdale Drive,
Nashville Tennessee 37217 (US)**

(74) Representative: **Fisher, Bernard et al, Raworth, Moss &
Cook 36 Sydenham Road, Croydon Surrey CR0 2EF (GB)**

(54) **Metal vacuum insulated container.**

(57) A vacuum insulated container is formed of aluminium, inner and outer pieces (2, 4, 14, 22) joined at one end by a stainless steel piece (18). Care is taken to assure a leakproof seal between the stainless steel and aluminium pieces. The surfaces of the aluminium pieces are carefully cleaned and deoxidized to provide reflective surfaces confronting each other in the evacuated space to eliminate the necessity of a separate relfective coating or infrared radiation barrier.

EP 0 109 262 A1

## Metal vacuum insulated container

This invention relates generally to improvements in insulated containers. More specifically, it relates to vacuum insulated containers formed from metallic materials.

It has been known for many years that there are certain advantages when vacuum insulated containers are formed from metallic materials. A principal advantage of such containers when compared to those made from glass is that they are break resistant to the point of being unbreakable in normal usage. However, those that have actually been successfully commercialized have been more costly as they are relatively difficult to manufacture.

For a number of years, at least one company, Aladdin Industries, Inc. of Nashville, Tennesse, the assignee of this application, has manufactured and sold under the trademark "Stanley" thermos bottles made of stainless steel. However, compared to vacuum insulated containers made of glass, the "Stanley" bottle is relatively costly and heavy.

A review of the prior art known to the applicant reveals a number of patents which represent prior efforts to produce a vacuum insulated container made of metal rather than glass. For instance, U.S.-A- 990,077 discloses a double walled outer container for "casing" which is evacuated. It is not clear from the text of the patent that the container walls are made of metal and it would appear that the construction is such that the casing has to be evacuated each time it is to be used.

U.S.-A- 1,551,778 discloses a double walled container made of sheet steel in which the space between the walls is filled with a cellular insulating material and in which the air has been "rarified" to enhance the insulating properties.

Another patent is U.S.-A- 2,089,805 which discloses a container having an inner shell of aluminium and an outer shell of steel and apparently depends upon the air trapped in the space between the two shells to provide some insulating capability.

U.S.-A- 2,144,820 discloses a vacuum container with an outer metal wall and an inner wall which may be either of metal or glass. A glass ring joins the inner and outer walls at their upper ends.

The use of plastic coated inner and outer walls is shown in U.S.-A- 2,643,021.

U.S.-A- 2,776,069 shows a container of stainless steel or copper with silver coated interior surfaces. Once again apparently the use of a metallic material is shown in U.S. -A- 2,845,199 where the inner and outer walls are held in position by "bumpers" of plastic.

U.S. -A- 3,207,354 discloses a container having aluminium inner and outer walls connected at their upper ends by stainless steel. The space between the inner and outer walls in addition to being evacuated is filled with absorbent insulating materials.

Another prior effort with which the applicant is familiar is U.S. -A- 3,331,522 which shows a vacuum container with an aluminium inner shell and an outer shell of mild steel and a neck of stainless steel joining the inner and outer shells.

U.S. -A- 3,863,794 teaches the use of plastic inner and outer shells with a thin metallic coating on their interior surfaces.

U.S.-A- 3,961,720 shows a vacuum insulated container formed by an evacuated tube which may be of metal encompassing a plastic liner.

Two more recent patents are U.S.-A- 4,138,027 and U.S.-A- 4,200,199. Both of these patents show vacuum insulated containers having relatively thin walls which require some kind of supporting or bracing means to prevent their collapse due to atmospheric pressure. The materials proposed are mild steel or aluminium. Use of stainless steel connecting the inner and outer shells is also disclosed in these patents.

While each of the foregoing patents sets out particular structures and features, it has been found for a number of reasons -- cost, ease of manufacture -- not one of them has ever, to applicant's knowledge, been proven satisfactory for successful commercial application. In addition to relatively high manufacturing costs, thus putting them at a severe economic disadvantage compared to the widely accepted and used thermos bottle, it has not been possible to make them in such a way as to even approach the thermal efficiency of the conventional glass vacuum model and equally important to maintain the vacuum over any really useful period of time. It is believed that there are several reasons for this; one is the difficulty of obtaining leakproof joints between the metal pieces used to form the container. Another reason has been the inability to make a metal vacuum container without a material in the evacuated space to absorb gases caused by outgassing and permeation, and add insulation, thus adding to the cost and weight.

Therefore, it is an object of this invention to provide a novel vacuum insulated container that is lightweight, sturdy and capable of maintaining a relatively high vacuum over a long period of time.

It is another object of this invention to provide a novel vacuum model formed of lightweight materials which, in addition to being relatively economical to manufacture, is durable and thermally efficient.

According to the present invention there is provided a vacuum insulated container comprising an inner shell having a bottom and upstanding sides, an outer shell encompassing said inner shell substantially conforming to the shape of the inner shell and spaced therefrom to provide a space therebetween, said inner and outer shells having opened upper ends, said inner and outer shells formed essentially of aluminium and having surfaces reflective in the infrared range confronting each other in the space between said shells, a piece extending said inner and outer shells and joined thereto at their opened upper ends to form, in conjunction with said shells, a closed space and wherein said closed space is substantially evacuated. The inner and outer shells are relatively thin and are with advantage joined at their tops by a stainless steel piece or neck. In order to achieve leakproof joints, the inner and outer shells are prepared in such a way as to provide continuous seals and in order to avoid the necessity of separate radiation barriers, the interior surfaces of the inner and outer shells are processed during the manufacturing procedure to yield surfaces reflective in the infrared range.

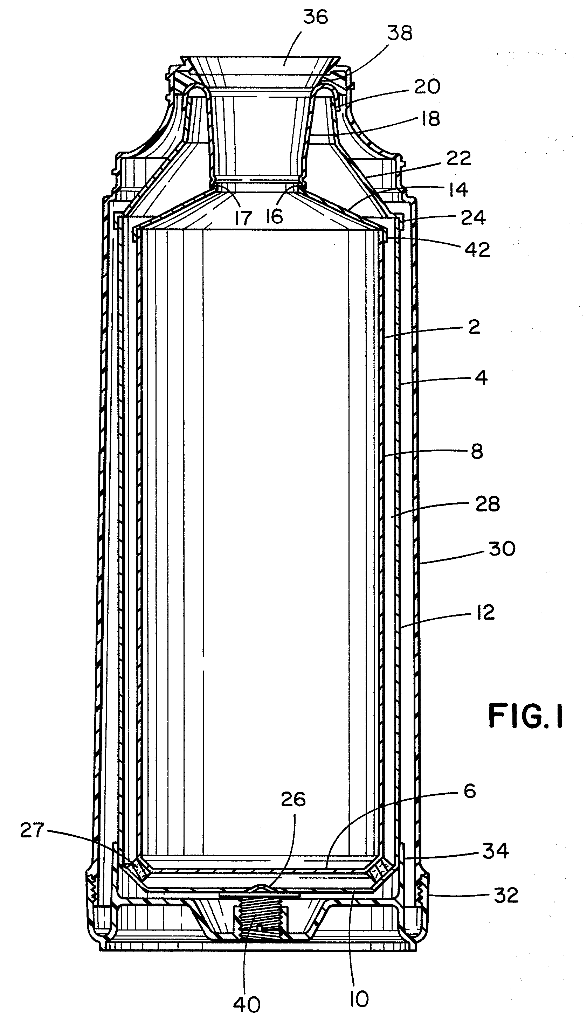

An embodiment of the invention will now be described by way of example, reference being made to the single figure of the accompanying drawing which is a section through a vacuum insulated container according to the invention.

In the embodiment illustrated, a container is formed as a double walled container with an inner shell 2 and an outer shell 4. In order to achieve the purposes of the invention, the shells 2 and 4 should be formed of aluminium. To provide the light weight desired and provide the mechanical strength necessary to withstand atmospheric pressure and handling, it has been found that a desirable thickness of the shells should be on the order of 0.635mm (0.025"). This may be done by using a number of forming techniques, for instance, by causing an aluminium disk or plate to be placed in a female die and using a draw and iron technique with a plunger entering the die to force a metal to flow from the disk between the surfaces of the female die and the plunger. In the case of the interior, a cylindrical structure having a bottom wall 6 and a side wall 8 will be formed. Likewise, the same is true with respect to a bottom shell 10 and a side wall 12. Other forming methods may be used but as may be seen in the illustrated embodiment, the results using this method are seamless inner and outer shells. It should be understood, however, that to achieve some different configurations, it may be desired to form the bottom and side walls of each shell as separate pieces. Each shell in the illustrated embodiment is in the shape of a cylinder, having a closed bottom and open top. Formed separately, in this embodiment, is an inner transition piece or throat 14, which tapers inwardly from the upper surface of the inner shell 2 toward a reduced diameter opening 16.   Joined to the reduced portion 16 of the throat 14 at a seam 17 is a neck 18.

In accordance with this aspect of the invention, the neck 18 is formed of stainless steel.   As pointed out, the inner and outer shells 2 and 4 are formed of aluminium. If the neck 18 were also formed of aluminium or aluminium alloy, there would be no difference between the thermal conductivity between the neck 18 and that of the shells themselves.   However, stainless steel has a significantly lower co-efficient of thermal conductivity than does aluminium.   Consequently, the neck 18 serves as a heat barrier between the inner and outer shells, reducing the heat flow between those shells so that the effect of the vacuum insulation between them is not negated.   As may be seen, the neck 18 is joined to the upper end 20 of an outer transition piece or collar 22 joined at its lower end 24 to the outer shell 4.   The bottom wall 10 of the outer shell 4 is provided with an opening 26 through which the space between the inner and outer shells is evacuated during the manufacture of the container.   After the space 28 has been evacuated, the opening 26 is closed.   However, it is preferred to provide an evacuation tube joined to the opening which is welded or otherwise secured to the wall, and which is subsequently pinched off or closed using mechanical force or other suitable means.   It may be found desirable to provide one or more small plugs 27 formed of asbestos or similar material secured between the inner and outer shells for stabilizing purposes and to absorb residual and occluded gases.

A vacuum container according to the invention may be complete as described for it will have sufficient mechanical strength in normal use.

However, it may be desirable, for commercial reasons, to enclose the container in a housing or jacket 30.   The jacket may be formed of a molded plastic material decorated by painting or otherwise and include a threaded bottom 32 having an upstanding rim 34 to secure the container against undesired movement and provided with an opening 36 at its upper end receiving a sealing gasket or ring 38 and adapted as desired to receive a stopper, cork or other suitable sealing means. In accordance with conventional vacuum container practice, a protective plug 40 may be provided at the bottom of the jacket to encompass and protect the evacuation tube (not shown).

In particular accordance with this invention, it is important that the stainless steel neck 18 be joined to the throat 14 and throat 22 by leakproof seams in order to insure the maintenance of the vacuum in the space 28 between the inner and outer walls 2, 4. Obviously, if such seams are not leakproof, then any vacuum created in that space by evacuation would be lost were air permitted to enter through the seams 17 and 20. Because the collar 14 is of aluminium as is the collar 22, the joints 24 and 42 between those pieces and the inner and outer walls 2 and 4 do not, respectively, pose the same problem. Further, it is possible to form the inner and outer walls, 2, 4 with integral throats and collars 14 and 22 so that the joints 24 and 42 are not present and no sealing problem exists.

One aspect of the invention as indicated above, is the provision of leakproof seals at the two seams 17 and 20, where the stainless steel neck 18 is joined to the throat 14 and collar 22. It has been found that such leakproof seams can be formed by careful cleaning and deoxidation of the surfaces, and then either brazing or soldering. Thus the aluminium parts, after being formed, are carefully cleaned using a solution of phosphoric acid, solvent, and surfactants. After cleaning, the surfaces are deoxidized using nitric acid and hydrofluoric acid as a minor constituent. The necks 18, after forming, are likewise degreased, cleaned, and subjected to a preliminary baking in order to reduce the hydrogen outgassing after evacuation. This is done above the annealing temperature of aluminium so it must be done prior to assembly.

It is contemplated that the seams 17 and 20 can be formed by either brazing or soldering. If brazing is used, the three pieces, after assembly to each other, are fluxed using a modified standard aluminium flux. Alternatively, if the joints are to be soldered, a solder of about 98% zinc and 2% aluminium can be used. In both cases, care must be taken to avoid heating the assembled parts during the brazing or soldering operation to temperatures approaching the melting point of aluminium to avoid distorting the shapes and ruining the joints. Therefore, care should be taken to avoid heating the pieces during the brazing or soldering operation to above about $635^{\circ}C$ ($1175^{\circ}F$), which is the approximate melting point of many aluminium alloys.

After the pieces have been joined, they are once again cleaned to remove any traces of brazing flux or soldering flux.

It has been found that by so preparing and joining the stainless steel neck and aluminium collar and throat pieces, leakproof joints can be made.

To prepare the inner and outer shells, they too are cleaned and deoxidized. During this process, a hole has been pierced in the bottom of the outer shell and an exhaust tube has been assembled in that hole and welded to form another leakproof seam. At the same time, asbestos plugs have been secured by adhesive to the outer wall of the inner shell. The inner shell is assembled to the asssembly of throat, neck and collar at the joint 42 by welding, soldering or brazing. This assembly is then joined to the outer shell by welding, soldering or brazing at the joint 24.

At this point, the container is completely assembled and it remains to evacuate the space 28 between the inner and outer walls. Prior to doing this, however, it may be found desirable to provide a protective coating on the interior surface of the inner wall to avoid imparting any kind of metallic flavour to food or consumable liquid products which may be held in the container by a user. Before such a coating should be applied, however, it is desirable to bake the assembly principally to eliminate as much occluded gas in the metal pieces as possible. After this has been done, the interior surface may be coated with an inert organic based material for the purposes stated.

In addition to the creation of durable leakproof joints between the aluminium and stainless steel components of the container, another aspect of the invention is the creation by cleaning and deoxidation of particularly the surfaces of all the pieces facing the space 28 of relatively bright shiny surfaces. After such bright shiny surfaces have been created, and by relatively rapid progression to the evacuation step, those surfaces are maintained in that condition, that is, they are relatively highly reflective in the infrared range.

It has been appreciated for some time that, in order to have a truly thermally efficient vacuum container, that is, one which maintains the desired temperature over a useful period of time, it was desirable to provide shiny reflective confronting surfaces facing the evacuated space betwen the inner and outer walls of the container.

This is because heat loss or gain of material in the container is effected not only by the conduction through the space 28, but also by infrared radiation from one confronting surface to the other. Conductive heat losses are, of course, reduced markedly because of the substantial vacuum existing in the space 28. However, heat is transferred between the two surfaces by radiation and heat transfer of this kind is markedly reduced when those surfaces are highly reflective. Historically, this has been achieved in vacuum containers, including those of glass, by coating the surfaces with a reflective material, most commonly silver. This, of course, is a material the cost of which has increased markedly in recent years and, in order to apply a silver coating, a number of manufacturing steps have been required. A vacuum container according to this invention by cleaning, deoxidizing and rapidly handling the parts during manufacture, leaves by far the greater confronting surface areas with a relatively reflective aluminium surface, thereby eliminating the need for any additional reflective coating.

Vacuum insulated containers according to this invention have been built and tested in comparison with standard commercial glass thermos bottles. Generally speaking, it has been found that a glass thermos bottle into which boiling water, which may be at a temperature of $98.9^{\circ}C$ ($210^{\circ}F$), is poured, will after four hours most commonly be at a temperature of $90^{\circ}$ to $91.1^{\circ}C$ ($194^{\circ}$ to $196^{\circ}F$). Specimen vacuum containers made according to this invention, when subjected to the same test, will keep the boiling water at a temperature of approximately $87.8^{\circ}$ to $88.9^{\circ}C$ ($190^{\circ}$ to $192^{\circ}F$) after four hours. Thus, without the necessity of a granular filler material in the evacuated space, and without the necessity of a costly silver coating on the confronting surfaces of the evacuated space, a vacuum container approaching the thermal efficiency of a conventional glass thermos bottle is achieved. The resulting container offers the advantage of being quite unbreakable in contrast to glass, and relatively low in cost with respect to metal thermos bottles presently commercially available.

It is obvious that the appearance and configuration of the vacuum insulated container in accordance with this invention can be modified to suit the needs of a particular design. Thus, the relative dimensions may be altered to suit the purposes of a designer. For instance, the model illustrated has the general configuration of a more or less conventional thermos bottle. However, the container can be formed as a pitcher, a carafe, cup, bowl or any kind of serving or food or liquid container as the designer may choose. Likewise, changes in the assembly and processing steps can be altered while still remaining within the scope of the claims appended hereto.

0109262

-12-

Claims:

1. A vacuum insulated container comprising an inner shell (2) having a bottom (6) and upstanding sides (8), an outer shell (4) encompassing said inner shell (2) substantially conforming to the shape of the inner shell (2) and spaced therefrom to provide a space (28) therebetween, said inner and outer shells (2, 4) having opened upper ends, said inner and outer shells formed essentially of aluminium and having surfaces reflective in the infrared range confronting each other in the space, (28) between said shells, a piece (18) extending said inner and outer shells and joined thereto at their opened upper ends to form, in conjunction with said shells, a closed space and wherein said closed space is substantially evacuated.

2. A vacuum insulated container according to claim 1 characterized in that said inner and outer shells are formed of aluminium.

3. A vacuum insulated container according to claim 1 or 2 characterized in that said inner and outer shells have a thickness of about 0.635mm (0.025 inches).

4. A vacuum insulated container according to claim 1, 2 or 3 characterized in that said piece joining said inner and outer shells at their opened upper ends is formed from stainless steel.

5. A vacuum insulated container according to any one of the preceding claims characterized in that said closed evacuated space between said inner and outer shells is substantially free from all solid materials.

FIG.1

European Patent
Office

**EUROPEAN SEARCH REPORT**

0109262
Application number

EP  83 30 6843

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,X | US-A-4 138 027  (FRYE) <br> * Column  2, lines 55-61; column 4, lines 6-23 * | 1-5 | A 47 J  41/02 |
| | --- | | |
| D,X | US-A-3 207 354  (SKINNER et al.) <br> * Column  5, lines 52-66; column 7, lines 7-21 * | 1-4 | |
| | --- | | |
| D,X | US-A-3 331 522  (BRIDGES) <br> * Whole document * | 1,4,5 | |
| | ----- | | |

TECHNICAL FIELDS
SEARCHED (Int. Cl. 3)

A 47 J

The present search report has been drawn up for all claims

| Place of search <br> THE HAGUE | Date of completion of the search <br> 09-02-1984 | Examiner <br> SCHARTZ J. |
|---|---|---|